# EUROPEAN PATENT SPECIFICATION

(11) **EP 1 891 273 B1**
(45) Date of publication and mention of the grant of the patent: **16.07.2014**
(21) Application number: 06741582.8
(22) Date of filing: 29.05.2006
(51) Int. Cl.: E01C 23/01, E01B 35/00

(54) **A VISION SYSTEM AND A METHOD FOR SCANNING A TRAVELING SURFACE TO DETECT SURFACE DEFECTS THEREOF**
BEOBACHTUNGSSYSTEM UND VERFAHREN ZUM ABTASTEN EINER FAHRFLÄCHE ZUR ERFASSUNG VON OBERFLÄCHENDEFEKTEN DAVON
SYSTEME ET PROCEDE DE VISION ARTIFICIELLE PERMETTANT DE BALAYER UNE SURFACE DE CIRCULATION TELLE QU'UNE ROUTE AFIN D'EN DETECTER DES DEFAUTS DE SURFACE

(30) Priority: 02.06.2005 CA 2509076
(43) Date of publication of application: 27.02.2008
(73) Proprietor: Institut National d'Optique, Sainte-Foy, Quebec G1P 4S4 (CA)
(72) Inventor: LAURENT, John, Saint-Augustin-de-Desmaures, Québec G3A (CA); DOUCET, Michel, Saint-Augustin-de-Desmaures, Québec G3A (CA)
(74) Representative: Neyret, Daniel Jean Marie
(86) International application number: PCT/CA2006/000873
(87) International publication number: WO 2006/128282

(56) References cited:
- WO-A1-99/32725
- WO-A1-99/47886
- CA-A- 1 020 918
- CA-A1- 1 259 834
- CA-A1- 2 315 188
- JP-A- S62 173 777
- US-A- 4 796 998
- US-A- 4 899 296
- US-A- 4 899 296

## Description

### FIELD OF THE INVENTION

The present invention generally relates to road visual inspection, and more particularly concerns a vision system and a method for scanning a traveling surface such as a road to detect surface defects thereof.

### BACKGROUND OF THE INVENTION

Traveling surfaces such as roads, carriageways and the like are inherently subject to heavy wear from traffic and degradation from weather conditions and ground movements. It is known that wear of the roads foundations typically begins with the cracking of the pavement. This necessitates regular monitoring of the pavement condition to plan maintenance programs.

Fundamental to an effective maintenance and reconstruction program is the acquisition of accurate information concerning the condition of the pavement. At the present such procedures for obtaining this information are very time consuming and labor intensive and are inherently inaccurate and unreliable.

Despite a number of attempts that have been made to develop equipment for testing the condition of the pavement, most public agencies utilize a subjective system of analyzing the condition of the pavement by the human eye by directly viewing the pavement surface or indirectly viewing the pavement through the use of photographs and video that have been taken of the pavement. In the latter process, most often, the photos are analyzed by the human eye to determine the presence and severity of pavement distress features.

In a somewhat similar context, mobile equipment has been devised in the past for determining the roughness of the road or pavement. Indeed, vision systems mountable on a vehicle traveling onto a traveling surface such a road have been developed. However, most existing imaging systems, which use 2D cameras, often suffer from non-uniform lighting and shadows generally caused by the presence of the sun, trees, viaducts, buildings, the inspection vehicle itself or other vehicles as non-limitative examples. With these systems, detection of cracks is neither accurate nor reliable due to the limited resolution of the cameras and the poor contrast of the gathered images. Moreover, because of the presence of the sun, it is challenging task to maintain image quality under this highly variable and uncontrolled light.

For example, known in the art, there is an automated road and pavement condition data collection system proposed by the company Pathway services Inc. which relies on the use of 4 cameras. Two cameras are mounted in front of the vehicle for providing a first set of images while the remaining two cameras are mounted in the back of the vehicle for providing a second set of images. With this particular arrangement, generally, at least one of the two sets of images will not have shadows caused by the inspection vehicle. However, both sets of images may suffer from other shadows coming from surrounding trees, buildings for example. Moreover, this system is quite cumbersome since it relies on the use of a set of camera both in front and rear of the vehicle.

Also known in the art, there is a road inspection system proposed by Fugro-bre Inc. which relies on the use of a digital camera and synchronized strobe lights for inspecting the road. This system is mounted on the rear of a vehicle and is quite cumbersome. Moreover, this system has to operate at night-time to avoid shadows and difficult illumination conditions caused by the sun.

Also known in the art, there is the crack detection system developed by Roadware which uses matrix cameras with strobe lights to allow the system to operate in daytime. The cameras are capable of recording images at speeds up to 50 mph. One major disadvantage of such a configuration is that the angle between the strobe lights and the cameras are a cause a major non-uniformities in the images. This is caused by the fact that the pavement areas that are closer to the strobe lights appear much brighter than those further away, a lighting gradiantis thus created and reduces the quality of the images and contrasts.

Another system known in the art is the road inspection system that was proposed by both Waylink Corporation and International Cybernetics Corporation. Both these systems are provided with a single linescan camera which has to be extended high above the vehicle on which the system is mounted. The system is also provided with a large number of light bulbs in an attempt to produce a powerful uniform light line on the road to be inspected. The major disadvantage of this system is the large quantity of electricity needed, thousands of watts, to power the system. A generator is thus necessary to power the whole system. The whole system is thus cumbersome, and, moreover, it is not able to provide good shadow contrast in the images especially as pertains to longitudinal cracks.

Known in the art is WO 99/32725 A1 which discloses a vision system mountable on a vehicle. This system has reflectors that illuminate the field of view and a linear imaging system having a linear sensor directed along a optical axis.

Also known in the art is WO, 99/47886 A1, which discloses a system for rapidly measuring an object surface contour. First and second optical assemblies are arranged proximate to opposing sides of a section of the object to be measured. The optical assemblies project a linear beam on the object surface. A linescan camera has a single column of detector elements parallel with the object surface. The system can adjust the distance between the lasers to cause them to intersect at a scanning region, when the scanning region is aligned with the detector elements in the camera.

None of the above mentioned inspection systems is adapted to perform a fast enough automatic accurate road inspection immune to surrounding light condition changes while providing a compact and power efficient assembly.

Therefore, it would be desirable to provide a vision system for scanning atraveling surface such as a road to detect surface defects thereof, and whichwould give optimum crack image contrasts for both transverse and longitudinal cracks, which would be immune to surrounding light condition variations, whilebeing automatic, fast enough, compact and power efficient.

### SUMMARY OF THE INVENTION

An object of the present invention is to provide a vision system for scanning a traveling surface to detect surface defects thereof that satisfies the above mentioned needs.

Accordingly, the present invention provides a vision system mountable on a vehicle traveling onto a traveling surface for scanning the traveling surface to detect surface defects thereof. The vision system is provided with a linear imaging system having a linear sensor directed towards the traveling surface substantially transversally thereto along an optical axis substantially perpendicular to the traveling surface for successively imaging adjacent transversal linear portions of the traveling surface as the vehicle advances, thereby providing corresponding adjacent transversal linear images of the traveling surface. The vision system is also provided with laser line projecting means extending distal from the imaging system. The laser line projecting means have a laser beam axis angularly directed towards the traveling surface in a substantially coplanar relationship with the optical axis and the linear sensor of the imaging system for angularly projecting a laser line along the laser beam axis across the traveling surface on the corresponding transversal portion thereof to generate a transverse profile thereof in the corresponding image. The vision system is also provided with processing means operatively connected to the imaging system for processing the adjacent transversal linear images, thereby allowing to detect surface defects on the traveling surface.

In a further embodiment of the invention, the vision system is further provided with an additional linear imaging system mountable on the vehicle distal from the imaging system. The additional linear imaging system has a linear sensor directed towards the traveling surface substantially transversally thereto along an optical axis substantially perpendicular to the traveling surface for successively imaging additional adjacent transversal linear portions of the traveling surface, each being transversally adjoined to a corresponding one of the transversal linear portions, thereby providing corresponding additional adjacent transversal linear images of the traveling surface. The vision system further has additional laser line projecting means mountable on the vehicle distal from the additional linear imaging system. The additional laser line projecting means have a laser beam axis angularly directed towards the traveling surface in a substantially coplanar relationship with the optical axis and the linear sensor of the additional imaging system for angularly projecting an additional laser line along the laser beam axis across the traveling surface on the corresponding additional transversal linear portion thereof to generate a transverse profile thereof in the corresponding additional image.

According to another aspect of the invention, there is also provided a vision method for scanning a surface to detect surface defects thereof. The vision method comprises the steps of:
a) providing a vehicle traveling on the surface, the vehicle being provided with a vision system comprising laser line projecting means for projecting a laser line on the surface and linear imaging means distal from the laser projecting means for imaging the laser line;
b) angularly projecting the laser line across the surface within a laser projection plane extending in a substantially transversal and perpendicular relationship with the surface;
c) successively imaging the laser line substantially perpendicularly to the surface in a substantially coplanar relationship with the laser projection plane for providing successive adjacent transversal linear images of the surface as the vehicle advances; and
d) processing the adjacent transversal linear images for detecting surface defects on the surface.

In a further preferred embodiment of this method, the step b) further comprises the sub-step of angularly projecting an additional laser line across the surface within a distinct additional laser projection plane adjoining the laser projection plane and extending in a substantially transversal and perpendicular relationship with the surface. The step c) further comprises the sub-step of successively imaging the additional laser line substantially perpendicularly to the surface in a substantially coplanar relationship with the additional laser projection plane.

### BRIEF DESCRIPTION OF THE DRAWINGS

These and other objects and advantages of the invention will become apparent upon reading the detailed description and upon referring to the drawings in which :
FIGURE 1 is a perspective schematic representation of a vision system according to the present invention.
FIGURE 2 is a schematic representation of another vision system according to the present invention.
FIGURE 3 is a top view of the vision system shown in FIGURE 2.
FIGURE 4 is a schematic representation showing a vehicle onto which the vision system of FIGURE 2 is mounted.
FIGURE 5 is a top view of the vehicle shown in FIGURE 4.
FIGURE 6 is another schematic representation of the vision system shown in FIGURE 1.
FIGURE 7 shows a perspective view of a casing of the vision system of the present invention.
FIGURE 8 shows a road portion imaged with the vision system of the present invention.
FIGURE 9 shows another road portion imaged with the system of the present invention.

While the invention will be described in conjunction with example embodiments, it will be understood that it is not intended to limit the scope of the invention to such embodiments. On the contrary, it is intended to cover all alternatives, modifications and equivalents as may be included as defined by the appended claims.

### DESCRIPTION OF PREFERRED EMBODIMENTS

In the following description, similar features in the drawings have been given similar reference numerals and, in order to weight down the figures, some elements are not referred to in some figures if they were already identified in a precedent figure.

The present invention concerns a vision system which is mountable on a vehicle, such a van or a trailor for example, traveling onto a traveling surface such a road as a non-limitative example for scanning the traveling surface to detect surface defects thereof. The vision system, which can also be referred to as a pavement inspection apparatus, is capable of providing very reliable and accurate information on the road conditions, specially concerning the longitudinal and transversal profile of the pavement. Indeed, the vision system of the present invention is particularly devised to be immune to surrounding light condition variations, thereby allowing to provide optimum cracks image contrast for both transverse and longitudinal cracks.

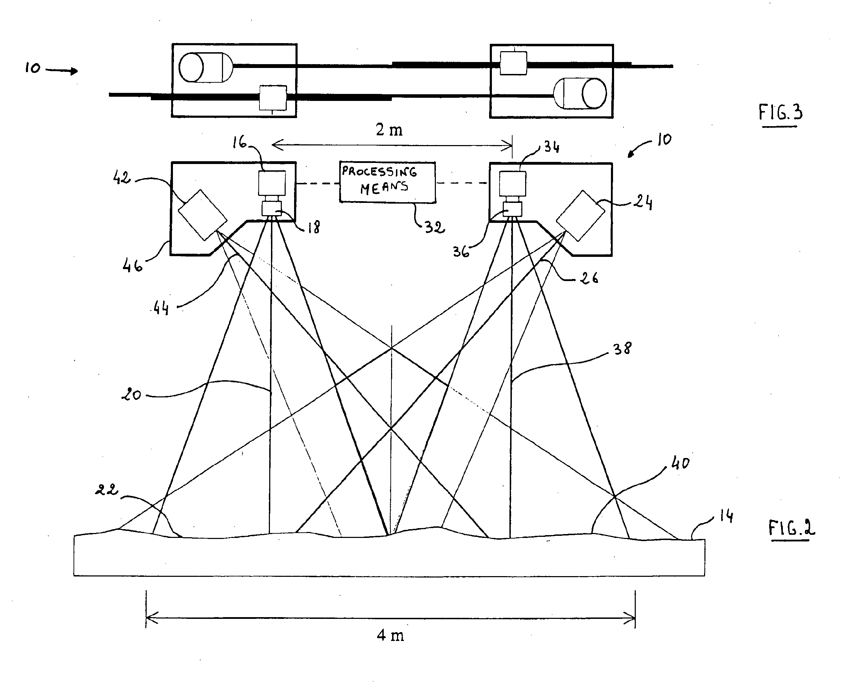

In a particularly advantageous embodiment which will be described in details thereinafter with reference to FIGURES 2 and 3, the vision system can advantageously perform the inspection of a full lane width of pavement, such as 4 meter Width. Moreover, the inspection task can advantageously be performed during normal traffic hours with the vehicle moving at normal traffic speed such as 100 km per hour without requiring the use of any special traffic procedures nor disrupting, detouring or slowing normal traffic.

Moreover, the present vision system uses laser light for illuminating the traveling surface, contrary to the prior art devices which use conventional lighting requiring a lot of energy. Thus, the vision system proposed by the present invention has the great advantage of being very power efficient in comparison to the existing devices, while being capable of operating during night or day.

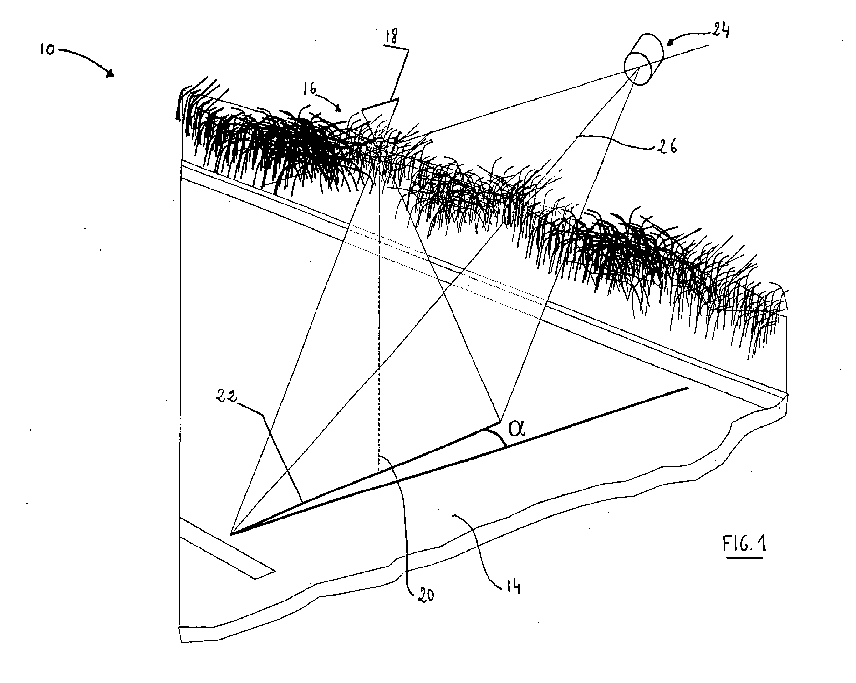

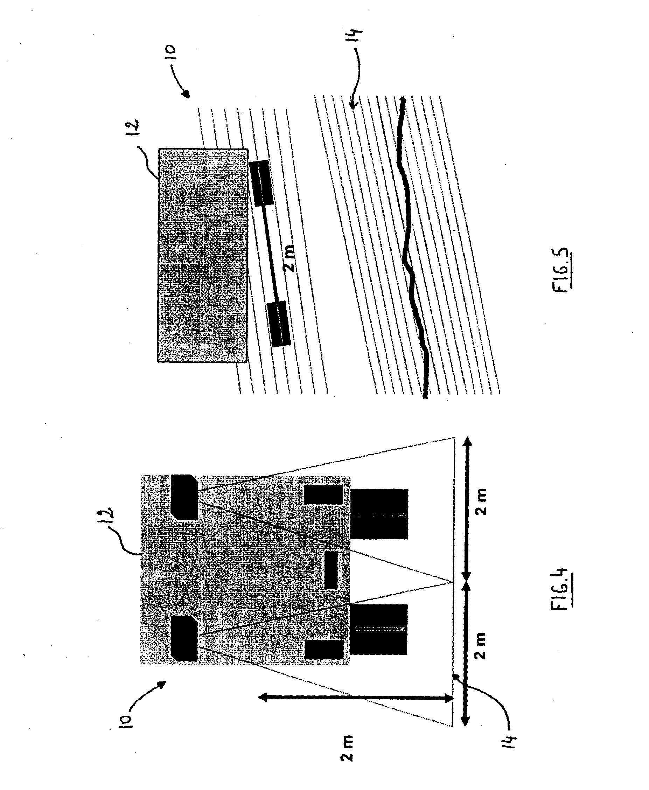

Referring now to FIGURE 1 there is shown a vision system **10** according to the present invention. The vision system **10** is devised to be mountable on a vehicle **12,** as better shown in FIGURE 4. Preferably, the vision system **10** is mounted on the rear of the vehicle **12** which is able to travel onto a traveling surface **14,** such as a road, for scanning the traveling surface **14** to detect surface defects thereof. It is worth mentioning that the vision system of the present invention could also be used to scan any convenient substantially plane surface in relative motion with respect to the vision system, but is nevertheless particularly intended to scan traveling surfaces such as roads, or even sidewalks and could also be easily adapted to scan a railway as a non-limitative example. The vision system **10** is provided with a linear imaging system **16** having a linear sensor **18** directed towards the traveling surface **14** substantially transversally thereto along an optical axis **20** substantially perpendicular to the traveling surface **14**. The linear imaging system **16** is thus able to image any forms or objects located in the plane extending along the optical axis **20** in alignment relationship with the linear sensor **18**. The linear imaging system **16** is thus able to successively image adjacent transversal linear portions **22** of the traveling surface **14** as the vehicle **12** advances, thereby providing corresponding adjacent transversal linear images of the traveling surface **14**. As illustrated in FIGURE 1, by the expression "substantially transversally", it is meant that the linear sensor **18** can image a linear portion **22** of the surface **14** extending in a transversal manner across the traveling surface **14**. Of course the imaged linear portion **22** can be really transversal to the traveling surface **14** but can also advantageously extend at a slant scanning angle α, preferably comprised between 0 and 45 degrees. In a more preferred embodiment and as illustrated in FIGURE 1, the slant scanning angle is rather quite small, preferably 5 degrees. This particular arrangement, in combination with the lighting system which will be described thereinafter, advantageously provides linear images wherein both transversal and longitudinal cracks of the road are more easily enhanced.

The vision system **10** is also provided with laser line projecting means **24** extending distal from the imaging system **16**. The laser line projecting means, such a laser projector for example, has a laser beam axis **26** angularly directed towards the traveling surface **14** in a substantially coplanar relationship with the optical axis **20** and the linear sensor **18** of the imaging system **16**. This allows to angularly projecting a laser line along the laser beam axis **26** across the traveling surface **14** on the corresponding transversal portion **22** thereof to generate a transverse profile thereof in the corresponding image. Preferably, the laser line projecting means **24** is provided with a high power laser. This allows to use the vision system during the day, either in sunny regions or shady regions, or even a mix of the both, without being negatively affected by shadows nor surrounding lighting conditions variations. In fact, the linear imaging system **16** is advantageously further provided with an optical filter (not shown) extending in front of the linear sensor **18** and particularly chosen to filter sun light while transmitting the laser light. This specific embodiment is particularly advantageous since it renders the present system immune to surrounding light condition changes, thereby providing a reliable and repeatable detection of surface defects.

Moreover, the specific arrangement of the laser line projecting means **24** which is particularly angularly positioned with respect to the imaging system **16** advantageously provides an enhancement of the apparent contrast of the cracks. Indeed, as explained above, the laser beam axis **26** of the laser line projecting means **24,** the laser line, the optical axis **20** of the linear sensor **18** and the linear sensor **18** itself, all extend in a coplanar relationship with each other. This coplanar relationship advantageously provides a great depth of view of the sensor **18.** Thus, the road portion to be imaged is always illuminated whatever the distance between the laser line projecting means **24** and the road. In fact, without this particular relationship, the laser line and the portion of the road seen by the linear sensor **18** will overlap only for a predetermined distance between the road and the vision system itself. Since the vehicle traveling on the road to be inspected is subject to up and down movements which continuously vary the distance between the laser line projecting means **24** and the road, the vision system **10** has to have a sufficiently good depth of field.

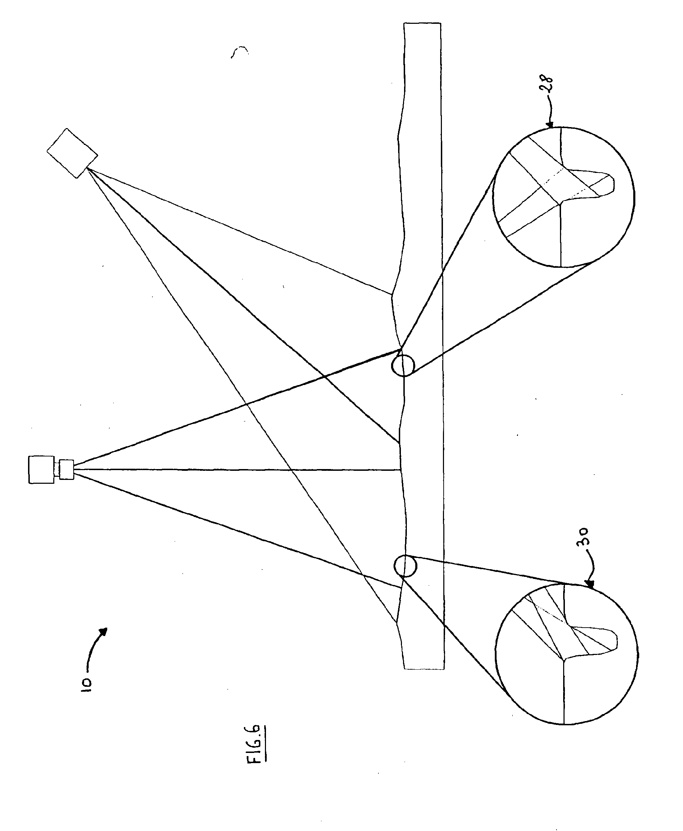

With reference now to FIGURE 6, there is illustrated the shadow effects generated by the angular laser light projection. This particular arrangement advantageously allows an enhancement of the visibility of the cracks of the road. In the road crack **28** in the right of FIGURE 6, the sensor **18** only sees the right side of the crack while the laser line only illuminates its left side. In the road crack **30** in the left of the FIGURE 6, the sensor **18** sees the left side of the crack which is only partly illuminated by the laser line because of the more strongly marked incidence angle of the laser line.

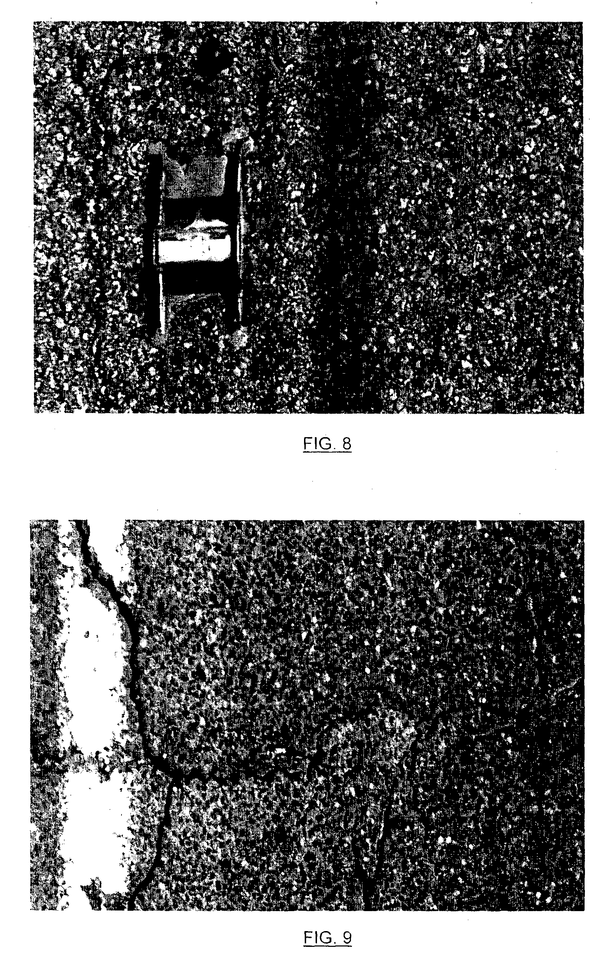

FIGURES 8 and 9 illustrate two distinct portions of a road which have been imaged, at 100 km/h with the present vision system **10**. One can clearly see that both longitudinal and transversal cracks are well enhanced and are thus easily detectable. Indeed, in the preferred embodiment of the present invention, the linear sensor is advantageously a linear 2048 pixels camera providing a precise detection of cracks as low as 1 millimetre width. Even the texture of the road can be seen. FIGURE 8, which shows a portion of a road provided with a tag, well illustrates the resolution that can be reached with the present system.

Referring now to FIGURE 2, which shows another preferred embodiment of the present invention which will be described in more details thereinafter, the vision system **10** is also provided with processing means **32**, such a computer, which is operatively connected to the imaging system **16** for processing the adjacent transversal linear images, thereby allowing to detect surface defects on the traveling surface **14**. With the expression "processing the adjacent transversal linear images", it is to be understood that the processing means is able to record the images for an immediate or subsequent inspection, which can be made by human eyes or automatically with an appropriate software. The processing means may also advantageously allow generation of reports and characterization of the surface defects. The processing means may also advantageously be provided with a global positioning system for performing a road mapping of the inspected roads and localization of defects thereof.

Referring now to FIGURES 3 to 5 and still to FIGURE 2, there is shown a more preferred embodiment of the present vision system **10**. In this preferred embodiment, the vision system **10** is advantageously provided with an additional linear imaging system **34** which is mountable on the vehicle **12** distal from the imaging system **16.** The additional linear imaging system **34** has a linear sensor **36** directed towards the traveling surface **14** substantially transversally thereto along an optical axis **38** substantially perpendicular to the traveling surface **14**. This arrangement allows to successively imaging additional adjacent transversal linear portions **40** of the traveling surface **14,** each being transversally adjoined to a corresponding one of the transversal linear portions **22,** thereby providing corresponding additional adjacent transversal linear images of the traveling surface **14.** As explained above with reference to FIGURE 1, by the expression "substantially transversally", it is meant that the linear sensor **34** can image a linear portion **40** of the surface **14** extending in a transversal manner across the traveling surface **14**. Of course the imaged linear portion **40** can be really transversal to the traveling surface **14** but can also advantageously extend at a slant scanning angle α, preferably comprised between 0 and 45 degrees. In a more preferred embodiment and as illustrated in FIGURE 5, the slant scanning angle is rather quite small, preferably 5 degrees. The slant angle is used to advantageously increase the contrast of transverse cracks using the same principle as was described in FIGURE 6 for the enhancement longitudinal cracks. In this preferred embodiment, the vision system **10** further has additional laser line projecting means **42** which are mountable on the vehicle **12** distal from the additional linear imaging system **34.** The additional laser line projecting means **42** have a laser beam axis **44** angularly directed towards the traveling surface **14** in a substantially coplanar relationship with the optical axis **38** and the linear sensor **36** of the additional imaging system **34.** This particular arrangement allows to angularly projecting an additional laser line along the laser beam axis **44** across the traveling surface **14** on the corresponding additional transversal linear portion **40** thereof to generate a transverse profile thereof in the corresponding additional image. This particular embodiment is very advantageous for performing inspection of a full lane width of pavement of 4 meter width for example. In a most preferred embodiment, each of the sensors 16, 34 comprises a 2048 pixels linear camera allowing to provide at least 28000 profiles per second. This provides a lateral resolution of 1 mm and a longitudinal resolution of 1mm when the vehicle travels at 100 km per hour.

Preferably, with reference to FIGURE 3, each of the laser line and additional laser line extends on the traveling surface **14** in a parallel relationship with each other. Also preferably, each of the laser line and additional laser line extends on the traveling surface **14** in a non-collinear relationship with each other. Still preferably, each of the laser line and additional laser line extends on the traveling surface **14** in a non-overlapping relationship in order to prevent potential saturation of the sensors **18, 36** which could eventually result.

Still referring to FIGURES 2 to 5, in this illustrated preferred embodiment, the laser line projecting means **24** advantageously extend proximal to the additional imaging system **34.** The additional laser line projecting means **42** advantageously extend proximal to the imaging system **16.** This particular arrangement allows to projecting the corresponding laser lines on the traveling surface **14** in a non-overlapping cross configuration. Preferably, each of the laser line projecting means **24, 42** extend outwards to the corresponding one of the imaging systems **16, 34,** but it could also be contemplated to mount each of the projecting means **24, 42** between the two imaging systems **16, 34.**

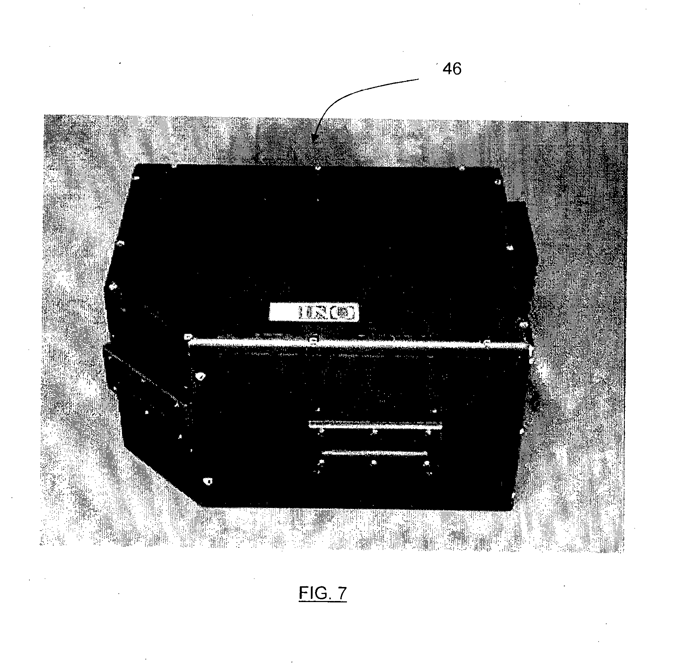

Still referring to FIGURES 2 to 5 and also to FIGURE 7, in a further preferred embodiment, the vision system of the present invention may advantageously be provided with a first and a second casing **46, 48,** each being mountable on the vehicle **12.** The first casing **46** receives the imaging system **16** and the additional laser projecting means **42** while the second casing **48** receives the additional imaging system **34** and the laser projecting means **24** therein. In other words, the right hand projecting means illuminate a portion of the road seen by the left hand camera and vice versa. Connecting and supporting the casings **46, 48** is advantageously a high torsion resistant beam (not illustrated) that provides a heavy rigidity to the whole system **10** in order to prevent misalignments between the projected laser lines and the imaged road portions **22,40,** while providing a compact assembly. As particularly illustrated in FIGURE 5, in this preferred embodiment, each of the laser line and additional laser line advantageously extends substantially transversally on the traveling surface in a parallel relationship to each other at a slant scanning angle comprised between 0 and 45 degrees, and more preferably at a slant scanning angle of 5 degrees. Preferably, as better shown in FIGURE 2, each of the laser lines extends in a non collinear relationship to each other, as previously mentioned.

According to another aspect, the present invention also provides a vision method for scanning a surface to detect surface defects thereof. The vision method comprises the steps of:
a) providing a vehicle traveling on the surface, the vehicle being provided with a vision system comprising laser line projecting means for projecting a laser line on the surface and linear imaging means distal from the laser projecting means for imaging the laser line;
b) angularly projecting the laser line across the surface within a laser projection plane extending in a substantially transversal and perpendicular relationship with the surface;
c) successively imaging the laser line substantially perpendicularly to the surface in a substantially coplanar relationship with the laser projection plane for providing successive adjacent transversal linear images of the surface as the vehicle advances; and
d) processing the adjacent transversal linear images for detecting surface defects on the surface.

Referring again to FIGURES 4 and 5, in a further preferred embodiment of this method, the step b) further comprises the sub-step of angularly projecting an additional laser line across the surface within a distinct additional laser projection plane adjoining the laser projection plane and extending in a substantially transversal and perpendicular relationship with the surface. The step c) further comprises the sub-step of successively imaging the additional laser line substantially perpendicularly to the surface in a substantially coplanar relationship with the additional laser projection plane.

Although preferred embodiments of the present invention have been described in detail herein and illustrated in the accompanying drawings, it is to be understood that the invention is not limited to these precise embodiments and that various changes and modifications may be effected therein without departing from the scope or spirit of the present invention.

## Claims

1. A vision system (10) mountable on a vehicle (12) traveling onto a traveling surface (14) for scanning said traveling surface (14) to detect surface defects thereof, said vision system comprising:
a linear imaging system (16) having a linear sensor (18) directed towards said traveling surface (14) substantially transversally thereto along an optical axis (20) substantially perpendicular to said traveling surface (14) for successively imaging adjacent transversal linear portions (22) of said traveling surface (14) as said vehicle (12) advances, thereby providing corresponding adjacent transversal linear images of said traveling surface; and
**characterized in that** said system comprises processing means (32) operatively connected to said imaging system (16) for processing said adjacent transversal linear images, thereby allowing to detect surface defects on said traveling surface; and
laser line projecting means (24) extending distal from said imaging system (16) and having a laser beam axis (26) angularly directed towards said traveling surface (14) in a substantially coplanar relationship with the optical axis (20) and the linear sensor (18) of said imaging system (16) for angularly projecting a laser line along said laser beam axis (26) across said traveling surface (14) on the corresponding transversal portion thereof to generate a transverse profile thereof in the corresponding image.

2. The vision system (10) according to claim 1, wherein said laser line extends substantially transversally on said traveling surface (14) at a slant scanning angle (α) comprised between 0 and 45 degrees.

3. The vision system (10) according to claim 2, wherein said slant scanning angle (α) is 5 degrees.

4. The vision system (10) according to claim 1, wherein said linear imaging system (16) is provided with an optical filter extending in front of the linear sensor (18).

5. The vision system (10) according to claim 1, wherein said vision system comprises an additional linear imaging system (34) mountable on said vehicle (12) distal from said imaging system (16), said additional linear imaging system (34) having a linear sensor (36) directed towards said traveling surface (14) substantially transversally there to along an optical axis (38) substantially perpendicular to said traveling surface (14) for successively imaging additional adjacent transversal linear portions (22) of said traveling surface (14), each being transversally adjoined to a corresponding one of said transversal linear portions (40), thereby providing corresponding additional adjacent transversal linear images of said traveling surface (14), said vision system (10) further comprising additional laser line projecting means (42) mountable on said vehicle (12) distal from said additional linear imaging system (34) and having a laser beam axis (44) angularly directed towards said traveling surface (14) in a substantially coplanar relationship with the optical axis (38) and the linear sensor (36) of said additional imaging system (34) for angularly projecting an additional laser line along said laser beam axis (44) across said traveling surface (14) on the corresponding additional transversal linear portion thereof to generate a transverse profile thereof in the corresponding additional image.

6. The vision system (10) according to claim 5, wherein each of said laser line and additional laser line extends on said traveling surface (14) in a parallel relationship with each other.

7. The vision system (10) according to claim 5, wherein each of said laser line and additional laser line extends on said traveling surface (14) in a non-collinear relationship with each other.

8. The vision system (10) according to claim 5, wherein each of said laser line and additional laser line extends on said traveling surface (14) in a non-overlapping relationship.

9. The vision system (10) according to claim 5, wherein each of said laser lines extends substantially transversally on said traveling surface (14) in a substantially parallel relationship with each other at a slant scanning angle (α) comprised between 0 and 45 degrees.

10. The vision system (10) according to claim 9, wherein said slant scanning angle (α) is 5 degrees.

11. The vision system (10) according to claim 5, wherein said laser line projecting means (24) extend proximal to said additional imaging system (34) and said additional laser line projecting means (42) extend proximal to said imaging system (16) for projecting the corresponding laser lines on said traveling surface (14) in a non-overlapping cross configuration.

12. The vision system (10) according to claim 11, wherein each of said laser line projecting means (24, 42) extends outwards to the corresponding one of said imaging systems (16, 34).

13. The vision system (10) according to claim 11, wherein each of said laser line projecting means (24, 42) projects the corresponding laser line on said traveling surface (14) in a parallel and non-collinear relationship to each other.

14. The vision system (10) according to claim 11, wherein said vision system (10) further comprises a first and a second casing (46, 48), each being mountable on said vehicle (12), said first casing (46) receiving said imaging system (16) and said additional laser projecting means (42) while said second casing (48) receives said additional imaging system (34) and said laser projecting means (24) therein.

15. The vision system (10) according to claim 14, wherein each of said laser lineand additional laser line extends substantially transversally on said traveling surface (14) in a parallel and non-collinear relationship to each other at a slant scanning angle (α) of 5 degrees.

16. A vision method for scanning a surface (14) to detect surface defects thereof, said vision method comprising the steps of:
i) providing a vehicle (12) traveling on said surface (14), said vehicle being provided with a vision system (10) comprising laser line projecting means (24) for projecting a laser line on said surface and linear imaging means (16) distal from said laser projecting means for imaging said laser line; and
ii) processing adjacent transversal linear images for detecting surface defects on said surface;
**characterized in that** said method further includes the steps of:
iii) angularly projecting said laser line across said surface (14) within a laser projection plane extending in a substantially transversal and perpendicular relationship with said surface (14); and
iv) successively imaging said laser line substantially perpendicularly to said surface in a substantially coplanar relationship with said laser projection plane for providing successive adjacent transversal linear images of said surface as said vehicle advances;

17. The vision method according to claim 16, wherein said step iii) further comprises the sub-step of angularly projecting an additional laser line across said surface within a distinct additional laser projection plane adjoining said laser projection plane and extending in a substantially transversal and perpendicular relationship with said surface, and wherein said step iv) further comprises the sub-step of successively imaging said additional laser line substantially perpendicularly to said surface in a substantially coplanar relationship with said additional laser projection plane.

## Patentansprüche

1. Sichtsystem (10), das an einem auf einer Fahrfläche (14) fahrenden Fahrzeug (12) befestigbar ist, um die Fahrfläche (14) zur Erfassung von Oberflächendefekten von dieser abzutasten, welches Sichtsystem aufweist:
ein lineares Abbildungssystem (16) mit einem linearen Sensor (18), der zu der Fahrfläche (14) im Wesentlichen quer zu dieser entlang einer optischen Achse (20), die im Wesentlichen senkrecht zu der Fahrfläche (14) ist, hin gerichtet ist, um aufeinanderfolgend benachbarte transversale Linearbereiche (22) der Fahrfläche (14) abzubilden, wenn sich das Fahrzeug (12) vorwärts bewegt, wodurch entsprechende benachbarte transversale Linearbilder der Fahrfläche erhalten werden; und
**dadurch gekennzeichnet, dass** das System Verarbeitungsmittel (32),
die operativ mit dem Abbildungssystem (16) verbunden sind, um die benachbarten transversalen Linearbilder zu verarbeiten, wodurch ermöglicht wird, Oberflächendefekte der Fahrfläche zu erfassen, aufweist; und
Laserlinien-Projektionsmittel (24) sich distal von dem Abbildungssystem (16) weg erstrecken und eine Laserstrahlachse (26) haben, die abgewinkelt zu der Fahrfläche (14) in einer im Wesentlichen koplanaren Beziehung mit der optischen Achse (20) und dem linearen Sensor (18) des Abbildungssystems (16) hin gerichtet ist, um eine Laserlinie entlang der Laserstrahlachse (26) abgewinkelt über die Fahrfläche (14) auf den entsprechenden transversalen Bereich hiervon zu projizieren, um ein Querprofil hiervon in dem entsprechenden Bild zu erzeugen.

2. Sichtsystem (10) nach Anspruch 1, bei dem die Laserlinie sich im Wesentlichen quer auf der Fahrfläche (14) unter einem schrägen Abtastwinkel (α) zwischen 0 und 45 Grad erstreckt.

3. Sichtsystem (10) nach Anspruch 2, bei dem der schräge Abtastwinkel (α) 5 Grad beträgt.

4. Sichtsystem (10) nach Anspruch 1, bei dem das lineare Abbildungssystem (16) mit einem optischen Filter versehen ist, das sich vor dem linearen Sensor (18) erstreckt.

5. Sichtsystem (10) nach Anspruch 1, bei dem das Sichtsystem ein zusätzliches lineares Abbildungssystem (34) aufweist, das an dem Fahrzeug (12) distal von dem Abbildungssystem (16) befestigbar ist, welches zusätzliche lineare Abbildungssystem (34) einen linearen Sensor (36) hat, der zu der Fahrfläche (14) im Wesentlichen transversal zu dieser entlang einer optischen Achse (38) im Wesentlichen senkrecht zu der Fahrfläche (14) gerichtet ist, um aufeinanderfolgend zusätzliche benachbarte transversale Linearbereiche (22) der Fahrfläche (14) abzubilden, von denen jeder transversal einem entsprechenden der transversalen Linearbereiche (40) beigefügt ist, wodurch entsprechende zusätzliche benachbarte transversale Linearbilder der Fahrfläche (14) erhalten werden, wobei das Sichtsystem (10) weiterhin zusätzliche Laserlinien-Projektionsmittel (42) aufweist, die an dem Fahrzeug (12) distal von dem zusätzlichen linearen Abbildungssystem (34) befestigbar sind und eine Laserstrahlachse (44) haben, die abgewinkelt zu der Fahrfläche (14) in einer im Wesentlichen koplanaren Beziehung mit der optischen Achse (38) und dem linearen Sensor (36) des zusätzlichen Abbildungssystems (34) hin gerichtet ist, um eine zusätzliche Laserlinie entlang der Laserstrahlachse (44) über die Fahrfläche (14) auf den entsprechenden zusätzlichen transversalen Linearbereich von dieser abgewinkelt zu projizieren, um ein Querprofil hiervon in dem entsprechenden zusätzlichen Bild zu erzeugen.

6. Sichtsystem (10) nach Anspruch 5, bei dem sich jeweils die Laserlinie und die zusätzliche Laserlinie auf der Fahrfläche (14) in einer zueinander parallelen Beziehung erstrecken.

7. Sichtsystem (10) nach Anspruch 5, bei dem sich jeweils die Laserlinie und die zusätzliche Laserlinie auf der Fahrfläche (14) in einer nicht-kollinearen Beziehung zueinander erstrecken.

8. Sichtsystem (10) nach Anspruch 5, bei dem sich jeweils die Laserlinie und die zusätzliche Laserlinie auf der Fahrfläche (14) in einer nichtüberlappenden Beziehung erstrecken.

9. Sichtsystem (10) nach Anspruch 5, bei dem sich jede der Laserlinien im Wesentlichen transversal auf der Fahrfläche (14) in einer im Wesentlichen zueinander parallelen Beziehung unter einem schrägen Abtastwinkel (α) zwischen 0 und 45 Grad erstreckt.

10. Sichtsystem (10) nach Anspruch 9, bei dem der schräge Abtastwinkel (α) 5 Grad beträgt.

11. Sichtsystem (10) nach Anspruch 5, bei dem die Laserlinien-Projektionsmittel (24) sich proximal zu dem zusätzlichen Abbildungssystem (34) erstrecken und die zusätzlichen Laserlinien-Projektionsmittel (42) sich proximal zu dem Abbildungssystem (16) erstrecken, um die entsprechenden Laserlinien auf die Fahrfläche (14) in einer nichtüberlappenden Querkonfiguration zu projizieren.

12. Sichtsystem (10) nach Anspruch 11, bei dem sich die jeweiligen Laserlinien-Projektionsmittel (24, 42) nach außen zu dem entsprechenden der Abbildungssysteme (16, 34) erstrecken.

13. Sichtsystem (10) nach Anspruch 11, bei dem die jeweiligen Laserlinien-Projektionsmittel (24, 42) die entsprechende Laserlinie auf die Fahrfläche (14) in einer zueinander parallelen und nicht-kollinearen Beziehung projizieren.

14. Sichtsystem (10) nach Anspruch 11, bei dem das Sichtsystem (10) weiterhin ein erstes und ein zweites Gehäuse (46, 48) aufweist, die jeweils an dem Fahrzeug (12) befestigbar sind, wobei das erste Gehäuse (46) das Abbildungssystem (16) und die zusätzlichen Laserprojektionsmittel (42) aufnimmt, während das zweite Gehäuse (48) das zusätzliche Abbildungssystem (34) und die Laserprojektionsmittel (24) aufnimmt.

15. Sichtsystem (10) nach Anspruch 14, bei dem sich die Laserlinie und die zusätzliche Laserlinie jeweils im Wesentlichen transversal auf der Fahrfläche (14) in einer zueinander parallelen und nicht-kollinearen Beziehung unter einem schrägen Abtastwinkel (α) von 5 Grad erstrecken.

16. Sichtverfahren zum Abtasten einer Oberfläche (14), um Oberflächendefekte von dieser zu erfassen, welches Sichtverfahren die Schritte aufweist:
i) Vorsehen eines auf der Oberfläche (14) fahrenden Fahrzeugs (12), welches Fahrzeug mit einem Sichtsystem (10) versehen ist, das Laserlinien-Projektionsmittel (24) zum Projizieren einer Laserlinie auf die Oberfläche und lineare Abbildungsmittel (16) distal von den Laserprojektionsmitteln zum Abbilden der Laserlinie aufweist; und
ii) Verarbeiten benachbarter transversaler linearer Bilder zum Erfassen von Oberflächendefekten auf der Oberfläche;
**dadurch gekennzeichnet, dass** das Verfahren weiterhin die Schritte enthält:
iii) abgewinkeltes Projizieren der Laserlinie über die Oberfläche (14) innerhalb einer Laserprojektionsebene, die sich in einer im Wesentlichen transversalen und senkrechten Beziehung zu der Oberfläche (14) erstreckt; und
iv) aufeinanderfolgendes Abbilden der Laserlinie im Wesentlichen senkrecht zu der Oberfläche in einer im Wesentlichen koplanaren Beziehung mit der Laserprojektionsebene, um aufeinanderfolgende benachbarte transversale lineare Bilder der Oberfläche zu erhalten, wenn sich das Fahrzeug vorwärts bewegt.

17. Sichtverfahren nach Anspruch 16, bei dem der Schritt iii) weiterhin den Subschritt des angewinkelten Projizierens einer zusätzlichen Laserlinie über die Oberfläche innerhalb einer getrennten zusätzlichen Laserprojektionsebene, die an die Laserprojektionsebene angrenzt und sich in einer im Wesentlichen transversalen und senkrechten Beziehung mit der Oberfläche erstreckt, aufweist, und bei dem der Schritt iv) weiterhin den Subschritt des aufeinanderfolgenden Abbildens der zusätzlichen Laserlinie im Wesentlichen senkrecht zu der Oberfläche in einer im Wesentlichen koplanaren Beziehung mit der zusätzlichen Laserprojektionsebene aufweist.

## Revendications

1. Système de vision (10) pouvant être monté sur un véhicule (12) circulant sur une surface de circulation (14) pour balayer ladite surface de circulation (14) afin de détecter ses défauts de surface, ledit système de vision comprenant :
un système d'imagerie linéaire (16) ayant un capteur linéaire (18) dirigé vers ladite surface de circulation (14) sensiblement transversalement à celle-ci, le long d'un axe optique (20) sensiblement perpendiculaire à ladite surface de circulation (14) pour imager successivement des parties linéaires transversales adjacentes (22) de ladite surface de circulation (14) lorsque ledit véhicule (12) avance, fournissant ainsi des images linéaires transversales adjacentes correspondantes de ladite surface de circulation ; et
**caractérisé en ce que** ledit système comprend des moyens de traitement (32) connectés opérationnellement audit système d'imagerie (16) pour traiter lesdites images linéaires transversales adjacentes, permettant ainsi de détecter des défauts de surface sur ladite surface de circulation ; et
des moyens de projection de raie laser (24) s'étendant à distance dudit système d'imagerie (16) et ayant un axe de faisceau laser (26) dirigé angulairement vers ladite surface de circulation (14) dans une relation sensiblement coplanaire avec l'axe optique (20) et le capteur linéaire (18) dudit système d'imagerie (16), pour projeter angulairement une raie laser le long dudit axe de faisceau laser (26) à travers ladite surface de circulation (14), sur sa partie transversale correspondante, pour générer un profil transversal de celle-ci sur l'image correspondante.

2. Système de vision (10) selon la revendication 1, dans lequel ladite raie laser s'étend sensiblement transversalement sur ladite surface de circulation (14) selon un angle de balayage incliné (α) compris entre 0 et 45 degrés.

3. Système de vision (10) selon la revendication 2, dans lequel ledit angle de balayage incliné (α) est de 5 degrés.

4. Système de vision (10) selon la revendication 1, dans lequel ledit système d'imagerie linéaire (16) est doté d'un filtre optique s'étendant devant le capteur linéaire (18).

5. Système de vision (10) selon la revendication 1, ledit système de vision comprenant un système d'imagerie linéaire supplémentaire (34) pouvant être monté sur ledit véhicule (12) à distance dudit système d'imagerie (16), ledit système d'imagerie linéaire supplémentaire (34) possédant un capteur linéaire (36) dirigé vers ladite surface de circulation (14) de manière sensiblement transversale à celle-ci le long d'un axe optique (38) sensiblement perpendiculaire à ladite surface de circulation (14) pour imager successivement des parties linéaires transversales adjacentes supplémentaires (22) de ladite surface de circulation (14), chacune étant transversalement contiguë à une partie correspondante desdites parties linéaires transversales (40), fournissant ainsi des images linéaires transversales adjacentes supplémentaires correspondantes de ladite surface de circulation (14), ledit système de vision (10) comprenant en outre des moyens de projection de raie laser supplémentaires (42) pouvant être montés sur ledit véhicule (12) à distance dudit système d'imagerie linéaire supplémentaire (34) et ayant un axe de faisceau laser (44) dirigé angulairement vers ladite surface de circulation (14) dans une relation sensiblement coplanaire avec l'axe optique (38) et le capteur linéaire (36) dudit système d'imagerie supplémentaire (34), pour projeter angulairement une raie laser supplémentaire le long dudit axe de faisceau laser (44) à travers ladite surface de circulation (14) sur sa partie linéaire transversale supplémentaire correspondante, pour générer un profil transversal de celle-ci sur l'image supplémentaire correspondante.

6. Système de vision (10) selon la revendication 5, dans lequel chacune de ladite raie laser et de la raie laser supplémentaire s'étend sur ladite surface de circulation (14) selon une relation parallèle l'une par rapport à l'autre.

7. Système de vision (10) selon la revendication 5, dans lequel chacune de ladite raie laser et de la raie laser supplémentaire s'étend sur ladite surface de circulation (14) selon une relation non colinéaire l'une par rapport à l'autre.

8. Système de vision (10) selon la revendication 5, dans lequel chacune de ladite raie laser et de la raie laser supplémentaire s'étend sur ladite surface de circulation (14) dans une relation de non-chevauchement.

9. Système de vision (10) selon la revendication 5, dans lequel chacune desdites raies laser s'étend sensiblement transversalement sur ladite surface de circulation (14) dans une relation sensiblement parallèle l'une par rapport à l'autre, selon un angle de balayage incliné (α) compris entre 0 et 45 degrés.

10. Système de vision (10) selon la revendication 9, dans lequel ledit angle de balayage incliné (α) est de 5 degrés.

11. Système de vision (10) selon la revendication 5, dans lequel lesdits moyens de projection de raie laser (24) s'étendent de façon proximale audit système d'imagerie supplémentaire (34) et lesdits moyens de projection de raie laser supplémentaires (42) s'étendent de façon proximale audit système d'imagerie (16), pour projeter lesdites raies laser correspondantes sur ladite surface de circulation (14) selon une configuration transversale de non-chevauchement.

12. Système de vision (10) selon la revendication 11, dans lequel chacun desdits moyens de projection de raie laser (24, 42) s'étend vers l'extérieur, vers le système correspondant desdits systèmes d'imagerie (16, 34).

13. Système de vision (10) selon la revendication 11, dans lequel chacun desdits moyens de projection de raie laser (24, 42) projette la raie laser correspondante sur ladite surface de circulation (14) selon une relation parallèle et non colinéaire l'un par rapport à l'autre.

14. Système de vision (10) selon la revendication 11, ledit système de vision (10) comprenant en outre un premier et un second boîtiers (46, 48), chacun pouvant être monté sur ledit véhicule (12), ledit premier boîtier (46) recevant ledit système d'imagerie (16) et lesdits moyens de projection de laser supplémentaires (42) tandis que ledit second boîtier (48) reçoit ledit système d'imagerie supplémentaire (34) et lesdits moyens de projection de laser (24).

15. Système de vision (10) selon la revendication 14, dans lequel chacune de ladite raie laser et de la raie laser supplémentaire s'étend de manière sensiblement transversale sur ladite surface de circulation (14) dans une relation parallèle et non colinéaire l'une par rapport à l'autre selon un angle de balayage incliné (α) de 5 degrés.

16. Procédé de vision pour balayer une surface (14) afin de détecter ses défauts de surface, ledit procédé de vision comprenant les étapes consistant à :
i) fournir un véhicule (12) circulant sur ladite surface (14), ledit véhicule étant doté d'un système de vision (10) comprenant des moyens de projection de raie laser (24) pour projeter une raie laser sur ladite surface et des moyens d'imagerie linéaire (16) distants desdits moyens de projection de laser pour imager ladite raie laser ; et
ii) traiter les images linéaires transversales adjacentes pour détecter des défauts de surface sur ladite surface ;
**caractérisé en ce que** ledit procédé comprend en outre les étapes consistant à :
iii) projeter angulairement ladite raie laser sur l'ensemble de ladite surface (14) dans un plan de projection de laser s'étendant dans une relation sensiblement transversale et perpendiculaire avec ladite surface (14) ; et
iv) imager successivement ladite raie laser, sensiblement perpendiculairement à ladite surface dans une relation sensiblement coplanaire par rapport audit plan de projection de laser pour fournir des images linéaires transversales adjacentes successives de ladite surface lorsque ledit véhicule avance ;

17. Procédé de vision selon la revendication 16, dans lequel ladite étape iii) comprend en outre la sous-étape consistant à projeter angulairement une raie laser supplémentaire sur l'ensemble de ladite surface dans un plan de projection de laser supplémentaire distinct, contigu audit plan de projection de laser et s'étendant dans une relation sensiblement transversale et perpendiculaire avec ladite surface, et dans lequel ladite étape iv) comprend en outre la sous-étape consistant à imager successivement ladite raie laser supplémentaire, sensiblement perpendiculairement à ladite surface dans une relation sensiblement coplanaire avec ledit plan de projection de laser supplémentaire.
